# EUROPÄISCHE PATENTSCHRIFT

(11) **EP 0 844 113 B1**
(45) Veröffentlichungstag und Bekanntmachung des Hinweises auf die Patenterteilung: **22.12.2004**
(21) Anmeldenummer: 97117553.4
(22) Anmeldetag: 10.10.1997
(51) Int. Cl.: B60C 27/08

(54) **Stegglied für eine Reifenkette**
Studlink for tyre chains
Maillon à étai pour chaînes de pneu

(30) Priorität: 20.11.1996 DE 29620212 U
(43) Veröffentlichungstag der Anmeldung: 27.05.1998
(73) Patentinhaber: EISEN- UND DRAHTWERK ERLAU AKTIENGESELLSCHAFT, D-73431 Aalen (DE)
(72) Erfinder: Müller, Anton, 73432 Aalen (DE); Uhl, Manfred, 73499 Ellwangen (DE)
(74) Vertreter: Jackisch-Kohl, Anna-Katharina

(56) Entgegenhaltungen:
- US-A- 5 072 763

## Beschreibung

Die Erfindung betrifft ein Stegglied für eine Reifenkette nach dem Oberbegriff des Anspruches 1.

Bei bekannten Steggliedern dieser Art (US-A-5,072,763) ist die Verschleißseite durch seitlich über Außenseiten des Steggliedes ragende Rippen verbreitert, so daß die Verschleiß- und Außenseiten profiliert sind. Die Griffigkeit des Steggliedes ist dadurch eingeschränkt. Zudem ist das Verschleißvolumen des Steggliedes nicht groß.

Der Erfindung liegt die Aufgabe zugrunde, ein Stegglied dieser Art so auszubilden, daß es bei einfacher, kostengünstiger Herstellung eine hohe Griffigkeit gewährleistet und ein großes Verschleißvolumen aufweist.

Diese Aufgabe wird bei einem Stegglied der gattungsbildenden Art erfindungsgemäß mit den kennzeichnenden Merkmalen des Anspruches 1 gelöst.

Beim erfindungsgemäßen Stegglied werden durch die seitlich über die Außenseiten ragenden Profilabschnitte der Verschleißseitetaschenartige, konkave Vertiefungen gebildet, die zusammen mit dem wellenförmig ausgebildeten Verschleißbereich eine hohe Spurhaltung und gute Traktion gewährleisten. Die gehärtete Verschleißfläche des Steggliedes hat eine vergrößerte Fläche, so daß dadurch die Einsatzdauer des Steggliedes wesentlich vergrößert wird. Das erfindungsgemäße Stegglied kann durch Stanzen, Drücken oder Schmieden einfach hergestellt werden. Es eignet sich vorteilhaft für Schnee- und Geländeketten; es kann aber auch für Reifenschutzketten eingesetzt werden.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsbeispiele näher erläutert. Es zeigt:
- Fig. 1: ein erfindungsgemäßes Stegglied in perspektivischer Darstellung,
- Fig. 2: das Stegglied nach Fig. 1 in Seitenansicht,
- Fig. 3: das Stegglied nach Fig. 1 in Stirnansicht gemäß Pfeil III in Fig. 1,
- Fig. 4: das Stegglied nach Fig. 1 in Draufsicht gemäß Pfeil IV in Fig. 2,
- Fig. 5: eine zweite Ausführungsform eines erfindungsgemäßen Steggliedes in perspektivischer Darstellung,
- Fig. 6: das Stegglied nach Fig. 5 in Seitenansicht,
- Fig. 7: das Stegglied nach Fig. 5 in Stirnansicht gemäß Pfeil VII in Fig. 5,
- Fig. 8: das Stegglied nach Fig. 5 in Draufsicht gemäß Pfeil VIII in Fig. 6,
- Fig. 9 und Fig. 10: jeweils eine andere Ausführungsform eines Teiles einer Gleitschutz- oder Geländekette mit den erfindungsgemäßen Steggliedern nach den Fig. 1 bis 4.

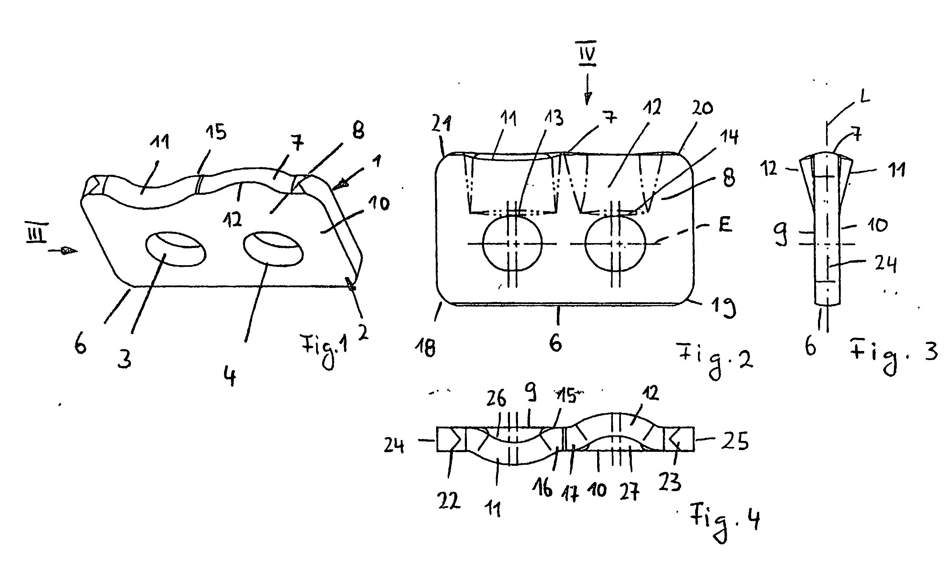

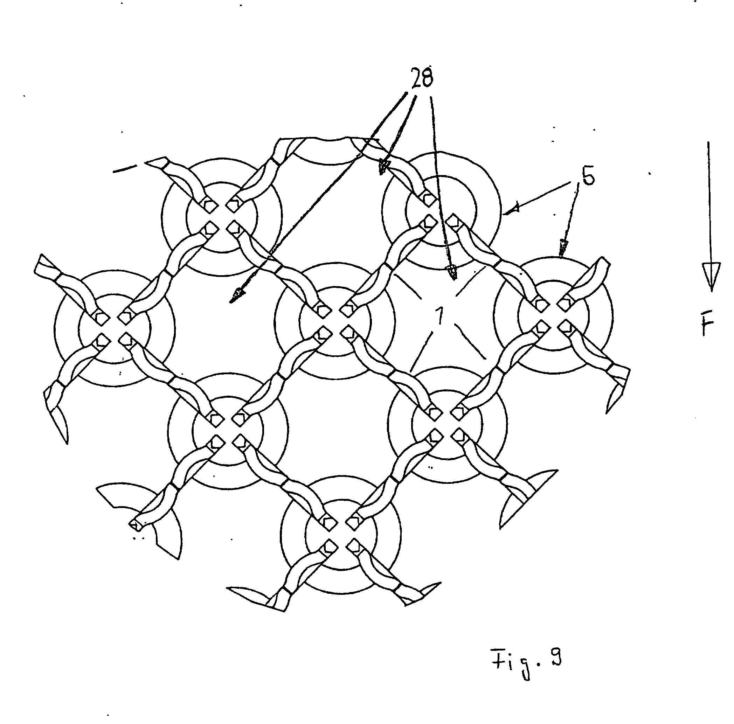

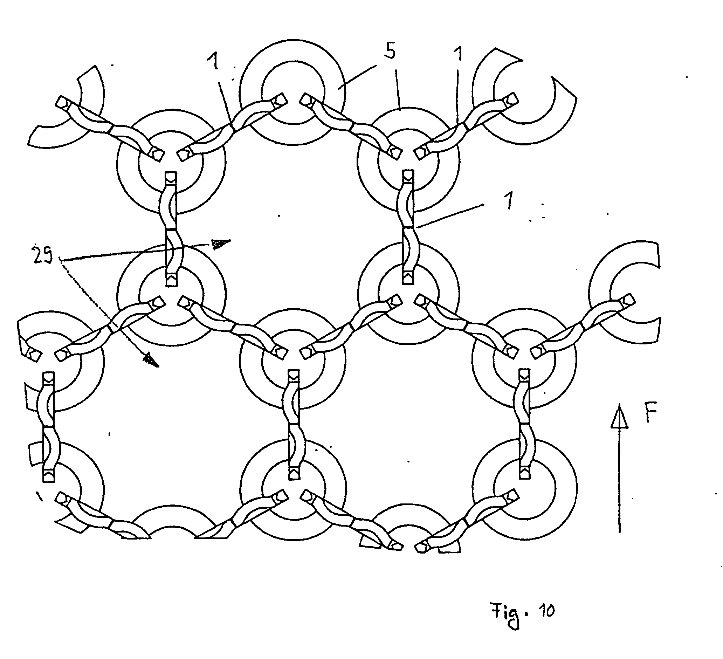

Das Stegglied 1 hat einen plattenartigen Gliedkörper 2 mit zwei auf gleicher Höhe und mit Abstand nebeneinander liegenden, vorzugsweise ovalen Einhängeöffnungen 3, 4, in die Ringglieder 5 (vgl. Fig. 9 und 10) einer Reifenkette eingehängt werden können. Die Längsmittelebene E der Einhängeöffnungen 3, 4, die senkrecht zur Plattenebene verläuft, hat von einer Reifenanlagefläche 6 des Steggliedes 1 etwas kleineren Abstand als von der gegenüberliegenden Verschleißseite 7. Die Reifenanlagefläche 6 ist, wie Fig. 3 zeigt, quer zur Gliedkörperlängsmittelebene L ballig gekrümmt, so daß das Stegglied 1 bei Verwendung in einer Rette mit kleinstmöglicher Reibung und geringem Anpreßdruck am Reifen anliegt.

Wie die Fig. 1 bis 4 weiter zeigen, ist der Verschleißbereich 8 des Steggliedes 1, der die Verschleißseite 7 aufweist, quer zur Längsmittelebene L des Gliedkörpers 2, wellenförmig profiliert, so daß oberhalb der beiden Einhängeöffnungen 3 und 4 jeweils ein über die Plattenaußenseiten 9 und 10 ragender, taschenartig ausgebildeter Profilteil 11 und 12 gebildet ist. Diese Profilteile bzw. -abschnitte sind vorzugsweise punktsmmetrisch in bezug auf die Quermittelebene des Steggliedes 1 ausgebildet und derart teilkreisförmig nach außen gewölbt, daß ihr jeweiliger Krümmungsradius vom Rand 13, 14 der Einhängeöffnungen 3, 4 aus stetig bis zur Verschleißseite 7 zunimmt. Die Profilteile 11, 12 ragen im Bereich der Verschleißseite 7 des Steggliedes 1 vorzugsweise etwa über die halbe Plattendicke des Steggliedes 1 über dessen Plattenaußenseite 9, 10 vor.

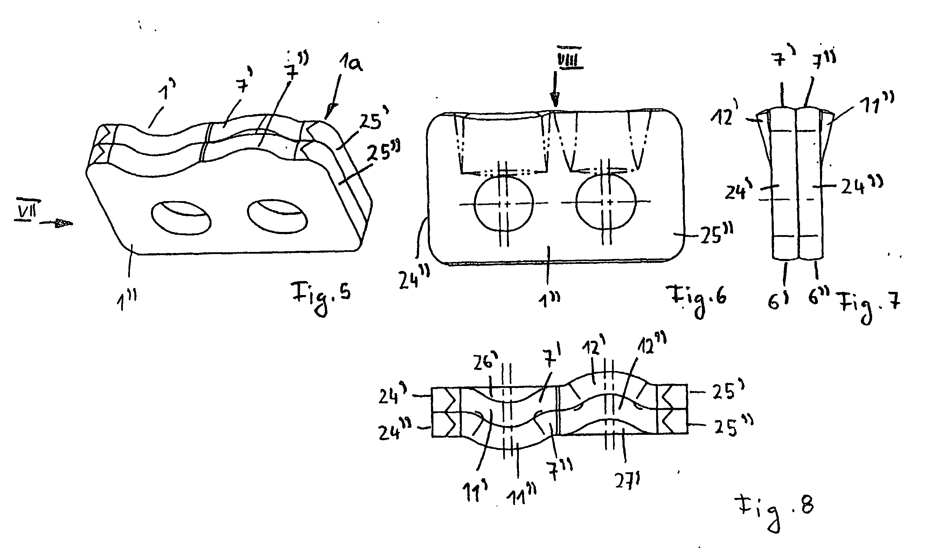

In Draufsicht gemäß Fig. 4 ist die Verschleißseite 7 etwa S-förmig gekrümmt, wobei jedoch in halber Länge des Steggliedes ein Übergangsbereich 15 gebildet ist, in dem die beiden Profilteile 11 und 12 mit in der Gliedkörperebene liegenden geraden Übergangsabschnitten 16, 17 ineinander übergehen.

In Seitenansicht gemäß Fig. 3 sind die Profilteilaußenseiten V-förmig zu den Plattenaußenseiten 9, 10 geneigt. Die Reifenanlagefläche 6 ist wie die Verschleißseite 7 ballig und quer zur Gliedkörperlängsmittelebene L gekrümmt. Die Ecken 18 bis 21 des Gliedkörpers 2 sind ebenfalls abgerundet.

Die Profilteile 11, 12 gehen in halber Länge des Gliedkörpers 2 ineinander über, während ihre voneinander abgewandten Enden in die seitlichen Plattenrandabschnitte 22, 23 (Fig. 4) übergehen. Sie liegen in der Gliedkörperebene und weisen die abgerundeten Eckbereiche 20, 21 (Fig. 2) auf, welche die Verschleißseite 7 mit den ebenen Stirnseiten 24, 25 des Gliedkörpers 2 verbinden. Die Profilteile 11, 12 stehen entgegengesetzt zueinander über die Plattenaußenseiten 9, 10 vor (Fig. 4) und begrenzen taschenartige konkave Vertiefungen 26, 27, deren Tiefe von der Verschleißseite 7 aus in Richtung auf die Einhängeöffnungen 3, 4 stetig abnimmt. Wie Fig. 4 zeigt, haben die Vertiefungen 26, 27 in halber Breite ihre größte Tiefe, die auch in Richtung auf die Stirnseiten 24, 25 und auf den Übergangsbereich 15 stetig abnimmt, bis die Seitenflächen der Profilteile 11, 12 in die ebenen, zueinander parallelen Platenaußenseiten 9, 10 des Gliedkörpers 2 übergehen.

Die beschriebene profilierte Ausbildung des Verschleißbereiches 8 des Steggliedes 1 mit den Profilteilen 11, 12 hat den Vorteil, daß sich die Profilteile mit ihren taschenartigen, konkaven Vertiefungen 26, 27 bei Verwendung dieser Stegglieder in einer Reifenkette oder dergleichen im Untergrund verkrallen können. Dadurch werden die Traktion der Reifenketten sowie ihre Standsicherheit und die Spurhaltung verbessert. Hierzu tragen nicht nur die Vertiefungen 26, 27, sondern auch die wellenförmige Ausbildung der Verschleißseite 7 bei. Diese wellenförmige Ausbildung des Verschleißbereiches 8 des Steggliedes 1 hat ferner den Vorteil, daß die Außenkontur des beschriebenen Steggliedes 1 gegenüber der herkömmlicher Stegglieder mit gerade verlaufendem Verschleißbereich vergrößert ist. Dadurch ist eine längere gekrümmte, gehärtete Oberfläche des Steggliedes gebildet, so daß die Einsatz- und Lebensdauer des Steggliedes 1 wesentlich gegenüber der herkömmlicher Stegglieder erhöht wird. Das Stegglied 1 kann entweder durch Stanzen oder Drücken oder auch durch Schmieden hergestellt sein.

Wie die Fig. 5 bis 8 zeigen, können zwei Stegglieder auch in paralleler, deckungsgleicher Anordnung zu einem Doppelstegglied 1a verbunden werden. Die Lebensdauer eines solchen Steggliedes ist gegenüber der des Steggliedes 1 weiter erhöht.

Das Stegglied 1a besteht aus zwei gleichen, deckungsgleich angeordneten Steggliedern 1' und 1''. Sie liegen mit ihren einander zugewandten Plattenaußenseiten flächig aufeinander, so daß ihre Stirnseiten 24', 24''; 25', 25'' sowie die Verschleißseite 7', 7'' und die Reifenanlageflächen 6', 6'' in einer gemeinsamen Ebene liegen bzw. eine gemeinsame wellenförmige Verschleißseite bilden.

Die Profilteile 11', 11'' und 12', 12'' der beiden Stegglieder 1' und 1'' liegen, wie beim Stegglied 1, auf verschiedenen Seiten des Steggliedes 1a. Infolge der taschenartigen Vertiefungen 26', 27' kann sich das Stegglied 1a beim Einsatz in einer Reifenkette im Untergrund verkrallen, wodurch eine hohe Griffigkeit und Spurhaltung der Kette gewährleistet sind.

Die Stegglieder 1, 1a können in einer Gleitschutz-, Geländekette, Schneekette oder auch in einer Reifenschutzkette mit den Ringgliedern 5 zu einem Gliederverband mit unterschiedlichen Kettenmaschenkonfigurationen verbunden werden. Vorteilhaft eignet sich das Stegglied 1a aufgrund seines hohen Verschleißvolumens zum Einsatz in Reifenschutzketten.

Die Stegglieder 1, 1a können mit den Ringgliedern 5 und/oder weiteren Steggliedern bekannter Ausbildung zu einer Reifenkette verbunden werden.

In den Fig. 9 und 10 sind Teile von Reifenketten dargestellt, bei denen Stegglieder 1 gemäß den Fig. 1 bis 4 mit Ringgliedern 5 in unterschiedlichen Kettenkonfigurationen miteinander verbunden sind. Bei der Reifenkette nach Fig. 9 ist in jede der Einhängeöffnungen der Stegglieder 1 jeweils ein Ringglied 5 eingehängt. Die Stegglieder 1 und die Ringglieder 5 bilden quadratische Kettenmaschen 28. Die Stegglieder 1 sind in der dargestellten Reifenkette so angeordnet, daß sie bei montierter Reifenkette jeweils unter einem Winkel von vorzugsweise 45° zur Fahrtrichtung F liegen.

Bei der Reifenkette gemäß Fig. 10 ist in jedes Stegglied 1 jeweils ein Ringglied 5 eingehängt, wobei die gleich ausgebildeten Kettenmaschen 29 sechseckigen Umriß haben. Wie Fig. 10 weiter zeigt, ist die Reifenkette in montierter Lage auf dem Reifen so angeordnet, daß zwei Stegglieder 1 der Masche 29 parallel zur Fahrtrichtung F liegen, während die übrigen Stegglieder der Kettenmasche 29 unter einem stumpfen Winkel zur Fahrtrichtung F liegen.

Die in den Fig. 9 und 10 dargestellten Reifenketten sind Schnee- oder Geländeketten, die infolge der verwendeten Stegglieder 1 eine hervorragende Standsicherheit bzw. Spurhaltung sowie eine hohe Traktion gewährleisten.

In der Reifenkette können auch Stegglieder 1 und 1a in Kombination vorgesehen sein. Dadurch können die unterschiedlichen Stegglieder 1, 1a je nach den gewünschten Anforderungen an die Reifenkette angeordnet werden.

## Patentansprüche

1. Stegglied (1, 1a) für eine Reifenkette, mit mindestens einer Einhängeöffnung (3, 4) für weitere Kettenglieder, insbesondere Ringglieder, die im Bereich zwischen einem eine Reifenanlagefläche (6) aufweisenden ersten Steggliedbereich und einem plattenartigen Verschleißbereich (8) liegen, der eine Verschleißseite (7, 7', 7") aufweist, die an wenigstens einem Profilabschnitt (11. 12; 11'; 12'; 11 ", 12") vorgesehen ist und seitlich über die Plattenaußenseite (9, 10) des Steggliedes (1, 1a) ragende Abschnitte aufweist,
**dadurch gekennzeichnet, daß** der Verschleißbereich (8) zur Bildung der Profilabschnitte (11, 12; 11', 12'; 11", 12") in Steggliedlängsrichtung wellenförmig verläuft.

2. Stegglied nach Anspruch 1,
**dadurch gekennzeichnet, daß** sich die Profilabschnitte (11, 12; 11', 11", 12', 12") im wesentlichen über die gesamte Höhe des Verschleißbereiches (8) erstrecken.

3. Stegglied nach Anspruch 1 oder 2,
**dadurch gekennzeichnet, daß** die Profilabschnitte (11, 12; 11', 11 ", 12', 12") im Bereich der Verschleißseite (7; 7', 7") ihre größte Breite haben, die vorteilhaft etwa der halben Dicke des Gliedkörpers (2) des Steggliedes (1; 1a) entspricht.

4. Stegglied nach einem der Ansprüche 1 bis 3,
**dadurch gekennzeichnet, daß** zwei vorzugsweise etwa in halber Breite des Gliedkörpers (2) ineinander übergehende Profilabschnitte (11, 12; 11', 11'', 12', 12'') vorgesehen sind.

5. Stegglied nach einem der Ansprüche 1 bis 4,
**dadurch gekennzeichnet, daß** die vorzugsweise wellenartig profilierte Verschleißseite (7; 7', 7'') durch den oberen Rand der Profilabschnitte (11, 12; 11', 11'', 12', 12'') gebildet ist.

6. Stegglied nach einem der Ansprüche 1 bis 5,
**dadurch gekennzeichnet, daß** die Profilabschnitte (11, 12; 11', 11 ", 12', 12") mit Abstand von den Stirnseiten (24, 25; 24', 24", 25', 25") des Steggliedes (1; 1a) enden.

7. Stegglied nach einem der Ansprüche 1 bis 6,
**dadurch gekennzeichnet, daß** die Profilabschnitte (11, 12; 11', 11'', 12', 12'') über einen geraden Übergangsabschnitt (16, 17) ineinander übergehen, der vorteilhaft mit den Endabschnitten (22, 23) des Gliedkörpers (2) fluchtet.

8. Stegglied nach einem der Ansprüche 1 bis 7,
**dadurch gekennzeichnet, daß** die Breite der Profilabschnitte (11, 12; 11', 11'', 12', 12'') von der Einhängeöffnung (3, 4) des Gliedkörpers (2) aus in Richtung auf die Verschleißseite (7; 7', 7'') vorzugsweise stetig zunimmt.

9. Stegglied nach einem der Ansprüche 1 bis 8,
**dadurch gekennzeichnet, daß** die Profilabschnitte (11, 12; 11', 11'', 12', 12'') in halber Breite am weitesten über die Seitenflächen (9, 10) des Gliedkörpers (2) ragen.

10. Stegglied nach einem der Ansprüche 1 bis 9,
**dadurch gekennzeichnet, daß** es als Doppelglied ausgebildet ist, und daß vorzugsweise zwei deckungsgleich zueinander liegende Stegglieder (1', 1'') miteinander verbunden sind.

11. Stegglied nach einem der Ansprüche 1 bis 10,
**dadurch gekennzeichnet, daß** es durch Stanzen hergestellt ist.

12. Stegglied nach einem der Ansprüche 1 bis 10,
**dadurch gekennzeichnet, daß** es durch Drücken hergestellt ist.

13. Stegglied nach einem der Ansprüche 1 bis 10,
**dadurch gekennzeichnet, daß** es durch Schmieden hergestellt ist.

## Claims

1. Stud link (1, 1a) for a tyre chain with at least one suspension opening (3, 4) for further chain links, in particular annulated links, which are situated within an area between a first area of the stud link, comprising a tyre contact surface (6) and a plate-like wear zone (8), which comprises a wear side (7, 7', 7") which is provided with at least one profile section (11, 12; 11', 12'; 11", 12"), comprising sections projecting sidewise over the outside of the plate (9, 10) of the stud link (1, 1a),
**characterized in that** the wear zone (8) for the formation of the profile sections (11, 12; 11', 12'; 11", 12") proceeds undulated in the longitudinal direction of the stud link.

2. Stud link according to claim 1,
**characterized in that** the profile sections (11, 12; 11', 12'; 11", 12") extend substantially over the total height of the wear zone (8).

3. Stud link according to claim 1 or 2,
**characterized in that** the profile sections (11, 12; 11', 12'; 11", 12") have within the area of the wear side (7, 7', 7") their greatest width, which advantageously corresponds to approximately half of the thickness of the link body (2) of the stud link (1; 1a).

4. Stud link according to one of the claims 1 to 3,
**characterized in that** two profile sections (11, 12; 11', 12'; 11", 12") are provided, moving into one another approximately halfway along the width of the link body (2).

5. Stud link according to one of the claims 1 to 4,
**characterized in that** the wear side (7, 7', 7"), preferably wave-like profiled, is formed by the upper border of the profile sections (11, 12; 11', 12'; 11 ", 12").

6. Stud link according to one of the claims 1 to 5,
**characterized in that** the profile sections (11, 12; 11', 12'; 11 ", 12") end at a certain distance from the end faces (24, 25; 24', 24"; 25', 25") of the stud link (1; 1a).

7. Stud link according to one of the claims 1 to 6,
**characterized in that** the profile sections (11, 12; 11', 12'; 11", 12") move into one another over a straight transitional section (16, 17), which is advantageously in line with the end section (22, 23) of the link body (2).

8. Stud link according to one of the claims 1 to 7,
**characterized in that** the width of the profile sections (11, 12; 11', 12'; 11 ", 12") advantageously increases steadily starting from the suspension opening (3, 4) of the link body (2) towards the wear side (7, 7', 7").

9. Stud link according to one of the claims 1 to 8,
**characterized in that** the profile sections (11, 12; 11', 12'; 11", 12") project halfway the width at the furthest over the lateral surfaces (9, 10) of the link body (2).

10. Stud link according to one of the claims 1 to 9,
**characterized in that** it is formed as a double link and that preferably two stud links (1', 1 "), being situated congruently to one another are connected to one another.

11. Stud link according to one of the claims 1 to 10,
**characterized in that** it is manufactured by punching.

12. Stud link according to one of the claims 1 to 10,
**characterized in that** it is manufactured by pressing.

13. Stud link according to one of the claims 1 to 10,
**characterized in that** it is manufactured by forging.

## Revendications

1. Maillon à étai (1, 1a) pour une chaîne de pneu avec au moins une ouverture d'accrochage (3, 4) pour maillons supplémentaires, en particulier maillons annulaires, situés dans la zone entre une première zone de maillon à étai comprenant une surface de contact de pneu (6) et une zone d'abrasion (8) en forme de plaque comprenant un côté d'abrasion (7, 7', 7") lequel est prévu au moins à une section de profil (11, 12; 11'; 12'; 11 ", 12") et comprend des sections faisant saillie latéralement sur la face extérieure de la plaque (9, 10) du maillon à étai (1 ; 1a),
**caractérisé en ce que** la zone d'abrasion (8) pour la formation des sections de profil (11, 12; 11'; 12'; 11 ", 12") est de forme ondulée.

2. Maillon à étai selon revendication 1,
**caractérisé en ce que** les sections de profil (11, 12; 11', 12'; 11", 12") s'étendent en substance sur l'hauteur totale de la zone d'abrasion (8).

3. Maillon à étai selon revendication 1 ou 2,
**caractérisé en ce que** les sections de profil (11, 12; 11', 12'; 11", 12") ont leur largeur maximale dans la zone du côté d'abrasion (7, 7', 7"), correspondant avantageusement à environ l'épaisseur de la moitié du corps de maillon (2) du maillon à étai (1; 1a).

4. Maillon à étai selon une des revendications 1 à 3,
**caractérisé en ce que** deux sections de profil (11, 12; 11', 12'; 11", 12") sont prévues se transformant l'une dans l'autre de préférence environ à la moitié de la largeur du corps de maillon (2).

5. Maillon à étai selon une des revendications 1 à 4,
**caractérisé en ce que** le côté d'abrasion (7', 7', 7"), de préférence de profil ondulé est formé par le bord supérieur des sections de profil (11, 12; 11', 12'; 11", 12").

6. Maillon à étai selon une des revendications 1 à 5,
**caractérisé en ce que** les sections de profil (11, 12; 11', 12'; 11", 12") se terminent à distance des côtés frontaux (24, 25; 24', 24" ; 25', 25") du maillon à étai (1; 1a).

7. Maillon à étai selon une des revendications 1 à 6,
**caractérisé en ce que** les sections de profil (11, 12; 11', 12'; 11", 12") se transforment l'une dans l'autre par une section rectiligne (16, 17), avantageusement alignée avec les sections finales (22, 23) du corps de maillon (2).

8. Maillon à étai selon une des revendications 1 à 7,
**caractérisé en ce que** la largeur des sections de profil (11, 12; 11', 12'; 11 ", 12") augmente de préférence continuellement à partir de l'ouverture d'accrochage (3, 4) du corps de maillon (2) en direction du côté d'abrasion (7, 7', 7").

9. Maillon à étai selon une des revendications 1 à 8,
**caractérisé en ce que** les sections de profil (11, 12; 11', 12'; 11", 12") faisant saillie au maximum dans la moitié de leur propre largeur sur la face latérale (9, 10) du corps de maillon (2).

10. Maillon à étai selon une des revendications 1 à 9,
**caractérisé en ce que** celui-ci a la forme d'un maillon double et que de préférence deux maillons à étai (1; 1a), coïncidant l'un à l'autre sont reliés entre eux.

11. Maillon à étai selon une des revendications 1 à 10,
**caractérisé en ce qu'**il est fabriqué par estampage.

12. Maillon à étai selon une des revendications 1 à 10,
**caractérisé en ce qu'**il est fabriqué par emboutissage.

13. Maillon à étai selon une des revendications 1 à 10,
**caractérisé en ce qu'**il est fabriqué par forgeage.
